# EUROPEAN PATENT APPLICATION

(11) **EP 2 565 436 A1**
(43) Date of publication of application: **06.03.2013**
(21) Application number: 11774913.5
(22) Date of filing: 15.04.2011
(51) Int. Cl.: F02M 25/00, F02M 31/10

(54) **AMMONIA-BURNING INTERNAL COMBUSTION ENGINE**

(30) Priority: 26.04.2010 US 767297
(71) Applicant: TOYOTA JIDOSHA KABUSHIKI KAISHA, Toyota-shi, Aichi-ken, 471-8571 (JP)
(72) Inventor: MICHIKAWAUCHI, Ryo, Toyota-shi Aichi 471-8571 (JP); TANNO, Shiro, Toyota-shi Aichi 471-8571 (JP); ITO, Yasushi, Toyota-shi Aichi 471-8571 (JP)
(74) Representative: TBK
(86) International application number: PCT/JP2011/059879
(87) International publication number: WO 2011/136130

(57) **Abstract**

The disclosed ammonia-burning internal combustion engine, which uses ammonia as fuel, is provided with an ammonia supply device (13) that supplies ammonia to a combustion chamber (5) and a heating/pressurisation device (28) that heats and pressurises ammonia that is suppled by the ammonia supply device. The heating/pressurisation device heats and pressurises ammonia using the energy generated in association with the operation of the internal combustion engine. Thus, high energy efficiency throughout the entire internal combustion engine or throughout an entire vehicle fitted with an internal combustion engine can be maintained while the temperature and pressure of the ammonia that is supplied by ammonia jet valves can be appropriately controlled.

## Description

### TECHNICAL FIELD

The present invention relates to an ammonia burning internal combustion engine.

### BACKGROUND ART

In an internal combustion engine, in the past, the fuel used has mainly been fossil fuels. However, in this case, burning such fuels produces CO₂, which causes global warming. On the other hand, burning ammonia does not produce CO₂ at all. Thus, there is known an internal combustion engine made so as to use ammonia as fuel and not produce CO₂ (for example, see PLT 1).

### CITATION LIST

### PATENT LITERATURE

PTL 1: Japanese Patent Publication (A) 5-332152).

### SUMMARY OF INVENTION

### TECHNICAL PROBLEM

However, ammonia has a large latent heat of vaporization. Therefore, when storing ammonia as a fuel in a liquid state and injecting it in a gaseous state from an ammonia injector into an intake port or combustion chamber, the ammonia falls in temperature when the ammonia vaporizes from a liquid into a gas inside a fuel feed passage. As a result, sometimes the vaporized ammonia does not sufficiently rise in pressure and insufficient feeding of the fuel of ammonia occurs. On the other hand, when injecting the ammonia in a liquid state from the ammonia injector into an intake port or combustion chamber, due to the ammonia being large in latent heat of vaporization, sometimes the ammonia injected from the ammonia injector does not sufficiently vaporize or the temperature of the air-fuel mixture at compression top dead center does not reach the ignition temperature. Therefore, to appropriately perform combustion of the air-fuel mixture inside the combustion chamber, it is necessary to appropriately control the temperature and pressure of the ammonia fed to the ammonia injector.

Further, when controlling the temperature and pressure of ammonia, it is necessary to raise the temperature and pressure of ammonia fed to the ammonia injector. However, because raising the temperature and pressure of the ammonia are accompanied with consumption of energy, it is necessary to secure an energy source so that the energy efficiency becomes optimal for the internal combustion engine as a whole or the vehicle mounted with the internal combustion engine as a whole.

Thus, an object of the present invention is to provide an ammonia burning internal combustion engine maintaining a high energy efficiency for the internal combustion engine as a whole or the vehicle mounted with the internal combustion engine as a whole while appropriately controlling the temperature or pressure of ammonia fed to the ammonia injector.

### SOLUTION TO PROBLEM

To achieve this object, the present invention provides an ammonia burning internal combustion engines recited in each claims of the claims.

To solve the above problem, one aspect of the invention comprises an ammonia burning internal combustion engine using ammonia as fuel, wherein the engine is provided with an ammonia feed device feeding ammonia to a combustion chamber and a temperature/pressure raising system raising the temperature or raising the pressure of the ammonia fed to the ammonia feed device, and the temperature/pressure raising system raises the temperature or raises the pressure with energy generated along with operation of the internal combustion engine.

In another aspect of the invention, the engine is further provided with a fuel tank storing ammonia, and the temperature/pressure raising system is provided at a fuel feed passage between the fuel tank and ammonia feed device.

In another aspect of the invention, the temperature/pressure raising system is a heat exchanger performing heat exchange between the ammonia fed to the ammonia feed device and a thermal fluid inside the internal combustion engine or a thermal fluid inside a vehicle mounted with the internal combustion engine, becoming higher in temperature than ordinary temperature when the internal combustion engine is operating.

In anther aspect of the invention, the engine is further provided with a generator driven by the ammonia burning internal combustion engine, and the temperature/pressure raising system raises the temperature or raises the pressure of ammonia by a heater or a compressor driven by electric power produced by the generator.

In anther aspect of the invention, the engine is further provided with a temperature detection device detecting a temperature of the ammonia fed to the ammonia feed device, and the temperature/pressure raising system raises the temperature of ammonia by the heat generated along with operation of the internal combustion engine and controls the heat amount added to the ammonia based on the temperature detected by the temperature detection device.

In anther aspect of the invention, the temperature/pressure raising system is a cooling device cooling the internal combustion engine, the ammonia used as fuel is used as a cooling medium of the cooling device, and the ammonia is raised in temperature along with cooling of the internal combustion engine.

In anther aspect of the invention, the temperature/pressure raising system is an air-conditioning system cooling a passenger compartment of a vehicle mounted with the internal combustion engine, the ammonia used as fuel is used as a cooling medium of the air-conditioning system, and the ammonia is raised in temperature along with cooling of the passenger compartment of the vehicle.

In anther aspect of the invention, the temperature/pressure raising system is an air-conditioning system cooling a passenger compartment of a vehicle mounted with the internal combustion engine, the ammonia used as fuel is used as a cooling medium of the air-conditioning system, the air-conditioning system is provided with a compressor pressurizing the cooling medium, and the ammonia is raised in pressure by the compressor.

In anther aspect of the invention, the engine is further provided with a temperature detection device detecting a temperature of the ammonia fed to the ammonia feed device or a temperature of the ammonia flowing out from the temperature/pressure raising system, a bypass passage bypassing the temperature/pressure raising system, and a flow rate control valve able to regulate the flow rate of ammonia flowing into the temperature/pressure raising system and bypass passage, and the flow rate of ammonia flowing into the temperature/pressure raising system is controlled based on the temperature detected by the temperature detection device.

In anther aspect of the invention the engine is further provided with an insulating heat storage container arranged at the temperature/pressure raising system or downstream of the temperature/pressure raising system, ammonia having a temperature higher than ordinary temperature is stored inside the heat storage container when the internal combustion engine is operating, and the ammonia inside the heat storage container is fed to the ammonia feed device when restarting a stopped internal combustion engine.

In anther aspect of the invention, the engine is further provided with a branch passage branched from a fuel feed passage between the temperature/pressure raising system and ammonia feed device and an insulating heat storage container provided at the branch passage, ammonia having a temperature higher than ordinary temperature is stored inside the heat storage container when the internal combustion engine is operating, and the ammonia inside the heat storage container is fed to the ammonia feed device when restarting a stopped internal combustion engine.

In anther aspect of the invention, the engine is further provided with a flow rate ratio control valve controlling the ratio of the flow rate of ammonia fed from the fuel tank through the temperature/pressure raising system to the ammonia feed device and the flow rate of ammonia fed from the heat storage container to the ammonia feed device, and the flow rate ratio control valve is controlled so that the temperature of ammonia fed to the ammonia feed device becomes a target temperature when restarting the internal combustion engine.

In anther aspect of the invention, the temperature/pressure raising system is further provided with a heat exchanger performing heat exchange between the ammonia fed to the ammonia feed device and a thermal fluid inside the internal combustion engine or a thermal fluid inside a vehicle mounted with the internal combustion engine, becoming higher in temperature than ordinary temperature when the internal combustion engine is operating, and an expander expanding the ammonia heated by the heat exchanger, the ammonia which flows out from the expander is fed to the ammonia feed device, and the temperature of ammonia which flows out from the expander is controlled by adjusting the degree by which the ammonia expands by the expander.

In anther aspect of the invention, the engine is further provided with a power recovery device driven by the expander.

In anther aspect of the invention, the engine is further provided with a cooling device for cooling the ammonia flowing out from the expander.

In anther aspect of the invention, the engine is further provided with a bypass passage for bypassing the heat exchanger and expander and a flow rate control valve regulating the flow rate of ammonia flowing into the bypass passage.

In anther aspect of the invention, the engine is further provided with a return passage for making a portion of the ammonia flowing out from the expander flow into the heat exchanger once again.

The present invention will be more clearly understood from the following description of the preferred embodiments given with reference to the attached drawings.

### BRIEF DESCRIPTION OF DRAWINGS

FIG. 1 is an overview of an ammonia burning internal combustion engine of a first embodiment.
FIG. 2 is a view schematically showing heat exchangers.
FIG. 3 is an overview of another example of an internal combustion engine of the first embodiment.
FIG. 4 is an overview of another example of an internal combustion engine of the first embodiment.
FIG. 5 is an overview of an ammonia burning internal combustion engine of a second embodiment.
FIG. 6 is a flow chart of a control routine for controlling the temperature of ammonia flowing into the ammonia injector.
FIG. 7 is a view showing modifications of the second embodiment.
FIG. 8 is a view schematically showing fuel feed systems of an ammonia burning internal combustion engine of a third embodiment.
FIG. 9 is a view schematically showing fuel feed systems of an ammonia burning internal combustion engine of a fourth embodiment.
FIG. 10 is a view schematically showing fuel feed systems of an ammonia burning internal combustion engine of a fifth embodiment.
FIG. 11 is a flow chart of a control routine for controlling the temperature of the ammonia flowing into the ammonia injector.
FIG. 12 is a view showing a modification of the fifth embodiment.
FIG. 13 is a view schematically showing fuel feed systems of an ammonia burning internal combustion engine of a sixth embodiment.

### DESCRIPTION OF EMBODIMENTS

Below, referring to the drawings, embodiments of the present invention will be explained in detail. Note that, in the following explanation, similar component elements are assigned the same reference numerals.

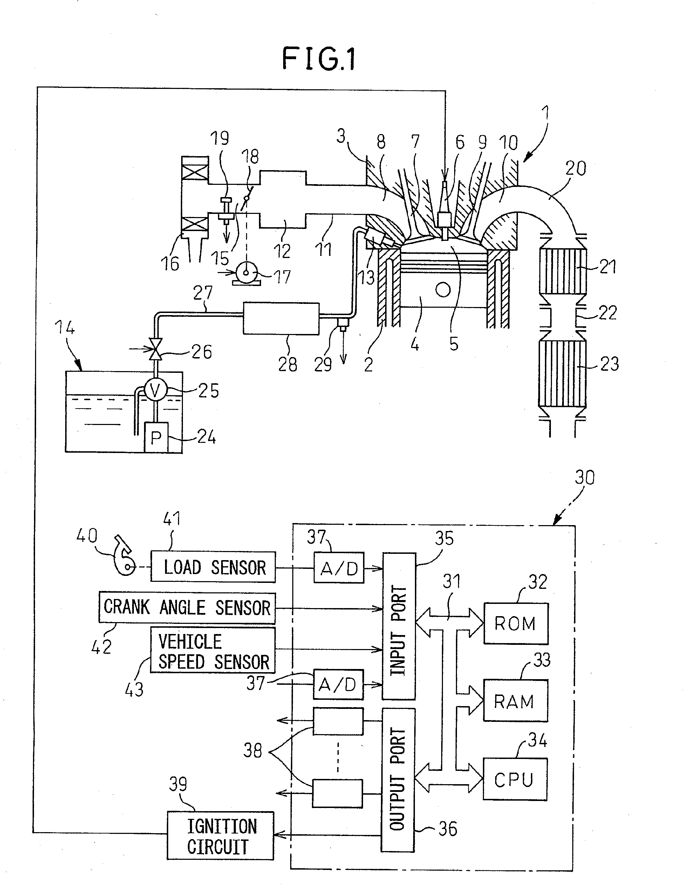

First, referring to FIG. 1, an ammonia burning internal combustion engine of the first embodiment of the present invention will be explained. Referring to FIG. 1, 1 is an engine body, 2 is a cylinder block, 3 is a cylinder head, 4 is a piston, 5 is a combustion chamber, 6 is an ignition device arranged at the center of the top surface of the combustion chamber 5, 7 is an intake valve, 8 is an intake port, 9 is an exhaust valve, and 10 is an exhaust port. In the embodiment shown in FIG. 1, the ignition device 6 is comprised of a plasma jet spark plug releasing a plasma jet. Further, at the cylinder head 3, there is arranged an ammonia injector (ammonia feed device) 13 for injecting liquid ammonia toward a corresponding combustion chamber 5. Liquid ammonia from the fuel tank 14 is fed to this ammonia injector 13.

The intake port 8 is coupled through intake branch pipes 11 to a surge tank 12. The surge tank 12 is coupled through an intake duct 15 to an air cleaner 16. Inside of the intake duct 15 is arranged a throttle valve 18 driven by an actuator 17 and an intake air detector 19 using a hot wire for example.

On the other hand, the exhaust port 10 is coupled through an exhaust manifold 20 to an upstream exhaust gas purification system 21. In the embodiment shown in FIG. 1, the upstream exhaust gas purification system 21 may be an ammonia adsorbent etc. able to adsorb the ammonia in the exhaust gas or an NOₓ adsorbent etc. able to adsorb the NOₓ in the exhaust gas. The upstream exhaust gas purification system 21 is coupled through an exhaust pipe 22 to the downstream exhaust gas purification system 23. In the embodiment shown in FIG. 1, this downstream exhaust gas purification system 21 may be an oxidation catalyst, NOₓ storage reduction catalyst, or NOₓ selective reduction catalyst able to purify the ammonia and NOₓ contained in the exhaust gas.

The fuel tank 14 is filled inside it with 0.8 MPa to 1.0 MPa of high pressure liquid ammonia. Inside this fuel tank 14, there is arranged an ammonia feed pump 24. The discharge port of the ammonia feed pump 24 is coupled, through a relief valve 25 that returns the liquid ammonia to the fuel tank 14 when the discharge pressure is a predetermined value or more and a shutoff valve 26 that is open during engine operation and closed when the engine stops, and ammonia feed pipe (ammonia feed passage) 27, to the liquid ammonia injector 13. Further, at the ammonia feed pipe 27, there are arranged a heat exchanger 28 to be mentioned later and a temperature sensor 29 downstream of the heat exchanger 28 detecting the temperature of liquid ammonia inside the ammonia feed pipe 27. The heat exchanger 28 is arranged as close to the ammonia injector 13 as possible so that the temperature of ammonia, which is raised by the heat exchanger 28, does not fall while the ammonia flows inside the ammonia feed pipe 27.

The electronic control unit 30 is comprised of a digital computer provided with a ROM (read only memory) 32, RAM (random access memory) 33, CPU (microprocessor) 34, input port 35, and output port 36 all connected to each other through a bi-directional bus 31. The output signals of the intake air detector 19 and the pressure sensor 29 are input through the corresponding AD converters 37 to the input port 35. An accelerator pedal 40 is connected to a load sensor 41 generating an output voltage proportional to the amount of depression of the accelerator pedal 40. The output voltage of the load sensor 41 is input through the corresponding AD converter 37 to the input port 35. Further, the input port 35 is connected to a crank angle sensor 42 generating an output pulse each time the crankshaft rotates by for example 10°. On the other hand, the output port 36 is connected to an ignition circuit 39 of an ignition device 6 and is further connected through corresponding drive circuits to the ammonia injector 13, throttle valve driving actuator 17, ammonia feed pump 24, and shutoff valve 26.

In such an ammonia burning internal combustion engine, at the time of engine operation, liquid ammonia is injected from the liquid ammonia injector 13 into the combustion chamber 5 of each cylinder. At this time, the liquid ammonia injected from the liquid ammonia injector 13 boils under vacuum and vaporizes immediately after it is injected.

The gaseous ammonia vaporized inside the combustion chamber 5 is ignited by the plasma jet jetted from the plasma jet spark plug 6 at the later half of the compression stroke. If the gaseous ammonia is made to completely burn, it theoretically becomes N₂ and H₂O, and CO₂ is not produced at all. However, in fact, unburned ammonia remains, and NOₓ forms from the combustion of the air-fuel mixture inside the combustion chamber 5. Therefore, unburned ammonia and NOₓ are exhausted from the combustion chamber 5. Therefore, inside the engine exhaust passage, there is arranged a downstream exhaust gas purification system 23 able to purify the unburned ammonia and NOₓ contained in the exhaust gas.

However, at the time of cold start etc., the temperature of the downstream exhaust gas purification catalyst 23 is low, so the downstream purification catalyst 23 does not become activated, therefore, it cannot purify the unburned ammonia exhausted from the engine body. Therefore, in the present embodiment, inside the engine exhaust passage and upstream of the downstream exhaust gas purification system 23, there is arranged an upstream exhaust gas purification system 21 that is able to adsorb the ammonia and NOₓ contained in the exhaust gas and releases the adsorbed ammonia and NOₓ when the temperature rises.

In this regard, ammonia has a larger latent heat of vaporization in comparison to fossil fuels etc. Therefore, if injecting ordinary temperature ammonia from the ammonia injector 13, the latent heat of vaporization of the ammonia causes heat to be robbed from the air inside the combustion chamber 5, and the temperature inside the combustion chamber 5 rapidly falls. If the temperature inside the combustion chamber 5 falls, the ammonia becomes harder to vaporize, and the temperature inside the combustion chamber 5 also becomes lower even at compression top dead center. Generally, ammonia is harder to burn compared to fossil fuels etc., so if it becomes hard to vaporize or if the temperature inside the combustion chamber 5 is lowered at compression top dead center, sometimes this leads to poor combustion or misfires.

Therefore, to promote vaporization of ammonia and raise the temperature inside the combustion chamber 5 at compression top dead center, it is necessary to raise the temperature of ammonia fed into the combustion chamber 5. Thus, in the present embodiment, the temperature of the ammonia fed to the ammonia injector 13 is made higher than the temperature of the ammonia inside the fuel tank 14.

As shown in FIG. 1, in the present embodiment, the heat exchanger 28 is provided at the ammonia feed pipe 27. This heat exchanger 28 performs heat exchange between a thermal fluid having a temperature higher than the temperature of the ammonia inside the fuel tank 14 (or the ammonia flowing out from the fuel tank 14 and flowing through the inside of the ammonia feed pipe 27), that is, the atmospheric temperature or the ordinary temperature, and the ammonia fed to the ammonia injector.

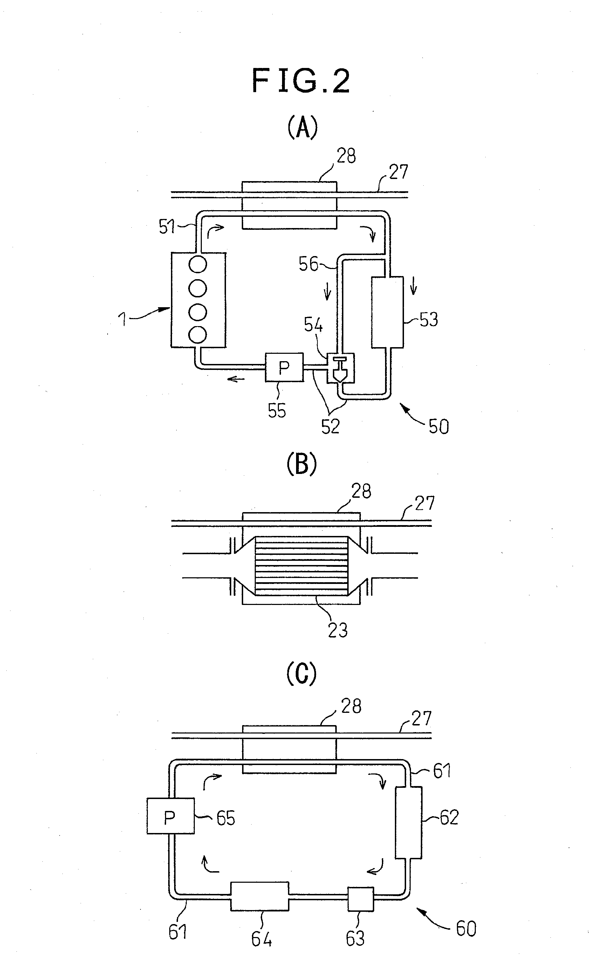

The thermal fluid used can be, for example, cooling water of the internal combustion engine. FIG. 2(A) is a view schematically showing the heat exchanger and a cooling system 50 of the internal combustion engine in a case where cooling water is used as the thermal fluid. As shown in FIG. 2(A), the engine cooling passage of the engine body 1 is coupled through an upstream communicating pipe 51 and a downstream communicating pipe 52 to a radiator 53. Inside the upstream communicating pipe 51, cooling water flows from the engine cooling passage of the engine body 1 to the radiator 53. Inside the downstream communicating pipe 52, cooling water flows from the radiator 53 into the engine cooling passage of the engine body 1.

At the downstream communicating pipe 52, there is provided a thermostat 54 and a water pump 55. The thermostat 54 is coupled to a bypass pipe 56 branching from the upstream communicating pipe 51. The thermostat 54 keeps the temperature of the cooling water inside the engine body 1 at a constant temperature or more and is closed when the temperature of the cooling water inside the engine body 1 is less than the constant temperature. If the thermostat 54 is closed, the flow of cooling water inside the downstream communicating pipe 52 from the radiator 53 to the thermostat 54 is shut off, therefore, cooling water ceases to flow inside the radiator 53. Further, if the thermostat 54 is closed, the outlet of the bypass pipe 56 to the downstream communicating pipe 52 is opened at the same time, whereby cooling water flows through the bypass pipe 56.

On the other hand, if the thermostat 54 is opened, the flow of cooling water inside the downstream communicating pipe 52 from the radiator 53 to the thermostat 54 is permitted, therefore the cooling water flows inside the radiator 53. Further, if the thermostat 54 is opened, the outlet of the bypass pipe 56 to the downstream communicating pipe 52 is closed at the same time, whereby the cooling water ceases to flow through the bypass pipe 56.

In such a cooling system 50 of the internal combustion engine, heat is robbed from the engine body 1 when the cooling water passes through the engine body 1, therefore the temperature of the cooling water flowing out from the engine body 1 is high. In the present embodiment, the heat exchanger 28 performs heat exchange between the cooling water flowing out from the engine body 1 and the ammonia flowing through the inside of the ammonia feed pipe 27. Therefore, the ammonia flowing through the inside of the ammonia feed pipe 27 can be raised in temperature.

Alternatively, the thermal fluid used can be exhaust gas. FIG. 2(B) is a schematic view of the heat exchanger 28 in a case using exhaust gas as the thermal fluid. As shown in FIG. 2(B), in the heat exchanger 28, heat exchange is performed between the ammonia flowing through the inside of the ammonia feed pipe 27 and the exhaust gas flowing inside the downstream exhaust gas purification system 23. Normally, the exhaust gas is high in temperature, so the ammonia flowing through the inside of the ammonia feed pipe 27 is raised in temperature by this heat exchanger.

Note that, when performing heat exchange between the ammonia flowing through the inside of the ammonia feed pipe 27 and the exhaust gas, heat exchange between the ammonia feed pipe 27 and the downstream exhaust gas purification system 23 is not necessarily required. For example, heat exchange may be performed with the exhaust brunch pipes 20, upstream exhaust gas purification system 21, or exhaust pipe 22. However, generally, the temperature of the exhaust gas becomes lower the further to the downstream side of the exhaust, so to sufficiently raise the temperature of the ammonia flowing through the inside of the ammonia feed pipe 27, it is preferable to provide the heat exchanger 28 as close to the upstream side of the exhaust passage as possible.

Alternatively, the thermal fluid used may be a cooling medium used with the vehicular air-conditioning system (for example, vehicular air-conditioner) etc. FIG. 2(C) is a schematic view of a heat exchanger 28 and a vehicular air-conditioning system 60 in a case where the cooling medium of a vehicular air-conditioning system is used as the thermal fluid. As shown in FIG. 2(C), the vehicular air-conditioning system 60 is provided with a circulation passage 61 in which cooling medium circulates, a condenser (heat exchanger) 62 arranged following this circulation passage 61, an expansion valve 63, an evaporator (heat exchanger) 64, and an air-conditioner compressor 65. As the cooling medium, for example, HFC-134a, Freon gas, ammonia, and other commonly used cooling media may be used.

In such a configured vehicular air-conditioning system 60, the cooling medium circulates in the direction indicated by the arrows in FIG. 2(C). The high temperature/pressure liquid or gaseous cooling medium pressurized by the air-conditioner compressor 65 releases its heat at the condenser 62 to the surroundings and is thereby cooled and becomes a medium extent of temperature of liquid cooling medium. This medium extent of temperature of liquid cooling medium passes through the expansion valve 63, whereby it becomes a low temperature/pressure atomized cooling medium which then flows into the evaporator 64. The low temperature/pressure atomized cooling medium flowing into the evaporator 64 robs heat from the surroundings and vaporizes, thereby becoming a low temperature/pressure gaseous cooling medium. At this time, along with the vaporization of the cooling medium, the heat of the passenger compartment is robbed so the passenger compartment is cooled. The low temperature/pressure gaseous cooling medium flowing out from the evaporator 64 becomes a high temperature/pressure liquid or gaseous cooling medium pressurized by the air-conditioner compressor 65 and flows into the condenser 62 once again. This vehicular air-conditioning system 60 repeats a cycle (refrigeration cycle) in which heat is robbed from the passenger compartment by the evaporator 64 to cool the passenger compartment and heat is released into the atmosphere by the condenser 62, so as to cool the passenger compartment.

Here, the cooling medium after pressurization by the air-conditioner compressor 65 becomes a high temperature as explained above. In the present embodiment, the heat exchanger 28 is used to perform heat exchange between the high temperature cooling medium flowing out from the air-conditioner compressor 65 and the ammonia flowing through the inside of the ammonia feed pipe 27. Due to this, the ammonia flowing through the inside of the ammonia feed pipe 27 can be raised in temperature. Note that, in the example shown in FIG. 2(C), heat exchange is performed between the circulation passage 61 between the air-conditioner compressor 65 and condenser 62 and the ammonia feed pipe 27, however, heat exchange between the condenser 62 and the ammonia feed pipe 27 may also be performed.

As shown in FIG. 2(A) to FIG. 2(C), in the heat exchanger 28, heat exchange is performed between the ammonia flowing through the inside of the ammonia feed pipe 27 and the thermal fluid inside the internal combustion engine becoming higher than the atmospheric temperature or ordinary temperature when the internal combustion engine is operating or the thermal fluid inside a vehicle mounted with the internal combustion engine, whereby the ammonia fed to the ammonia injector 13 can be made to rise in temperature. Further, in the embodiment, the thermal fluid used is thermal fluid heated along with the operation of the internal combustion engine, so the rise in temperature of the ammonia can be said to be performed by the energy generated along with the operation of the internal combustion engine. In particular, in FIG. 2(A) to FIG. 2(C), the heat normally released into the atmosphere is used to heat the ammonia, therefore it is possible to maintain a high energy efficiency for the internal combustion engine as a whole or the vehicle mounting the internal combustion engine as a whole while raising the temperature of the ammonia.

Note that, in the above embodiment, the thermal fluid heated along with the operation of the internal combustion engine is used by the heat exchanger to raise the temperature of the ammonia, however, it is also possible to provide an electric heater at the ammonia feed pipe 27 and use this electric heater to raise the temperature of the ammonia. In this case, the electric heater is fed power produced by the generator driven by the internal combustion engine. Further, in addition to the electric heater or in place of the electric heater, there may be provided an electric compressor pressurizing/compressing the ammonia flowing through the inside of the ammonia feed pipe 27. Note that, the electric heater and compressor are fed with power from the power generator driven along with the operation of the internal combustion engine, so the ammonia can be said to be raised in temperature and raised in pressure by the energy generated along with the operation of the internal combustion engine.

Further, in the above embodiment, the ammonia feed pipe 27 is provided with the heat exchanger 28 or electric heater or compressor so as to raise the temperature of the ammonia flowing through the inside of the ammonia feed pipe 27, however, the fuel tank 14 may be provided with the heat exchanger or electric heater or compressor so as to raise the temperature of the ammonia inside the fuel tank 14.

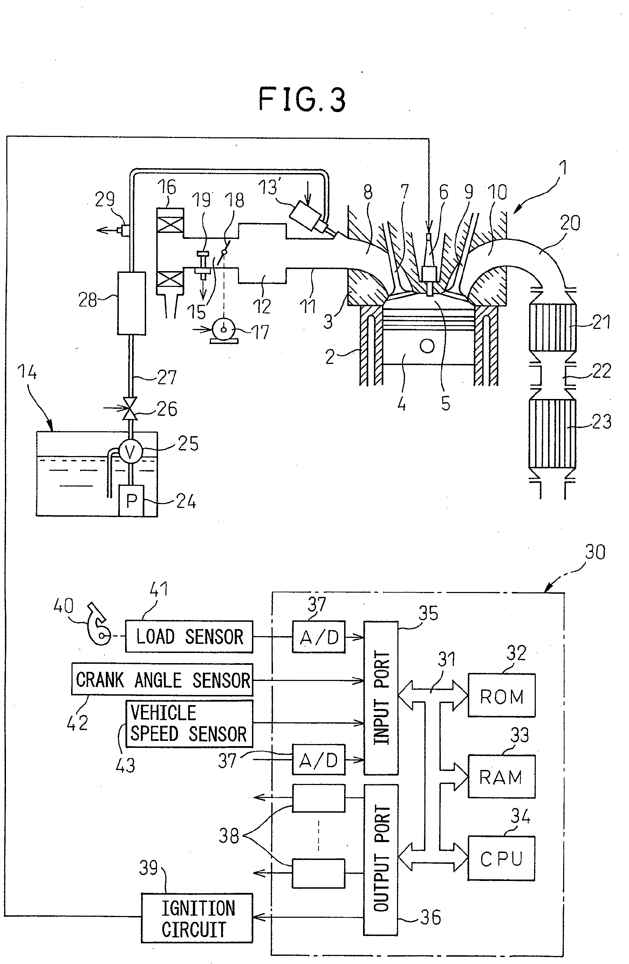

Note that, in the above embodiment, the ammonia injector 13 is arranged at the cylinder head 2 and injects ammonia toward a combustion chamber 5. However, the ammonia injector may, for example, as shown in FIG. 3, be arranged at the intake branch pipes 11 and inject liquid ammonia toward the corresponding intake port 8 (ammonia injector 13' of FIG. 3).

Further, in the above embodiment, the internal combustion engine used is a spark ignition type internal combustion engine that ignites the air-fuel mixture with an ignition device 6. However, the internal combustion engine used may be a compression ignition type internal combustion engine not having an ignition device 6.

Further, in the above embodiment, the liquid ammonia injector 13 is fed with ammonia as a liquid and injects liquid ammonia. In this regard, when injecting gaseous ammonia from the ammonia injector 13 into the intake port 8 or combustion chamber 5, a vaporizer is arranged at the ammonia feed pipe 27 to vaporize the liquid ammonia and gaseous ammonia is injected from the ammonia injector. Here, as explained above, ammonia has an extremely high latent heat of vaporization, therefore, when ammonia vaporizes from a liquid to a gas at the vaporizer, the ammonia falls in temperature. As a result, sometimes the vaporized ammonia does not sufficiently rise in pressure and insufficient feed of the fuel of ammonia occurs. Therefore, even when injecting gaseous ammonia from the ammonia injector 13, it is necessary to raise the temperature or raise the pressure of the ammonia fed to the ammonia injector 13. Therefore, the above embodiment can be applied to an ammonia burning internal combustion engine injecting gaseous ammonia from the ammonia injector 13.

Further, in the above embodiment, the fuel used is only ammonia. However, ammonia, compared to the fossil fuels used since the past, is difficult to burn. If the fuel used is only ammonia, sometimes appropriate combustion is not performed inside the combustion chamber 5. Therefore, as fuel, in addition to ammonia, fuel other than ammonia fuel (hereinafter referred to as "non-ammonia fuel") may be fed into the combustion chamber 5. Non-ammonia fuel may be fuel that is easier to burn than ammonia, for example, gasoline, diesel oil, liquefied natural gas, hydrogen obtained by reforming ammonia, etc.

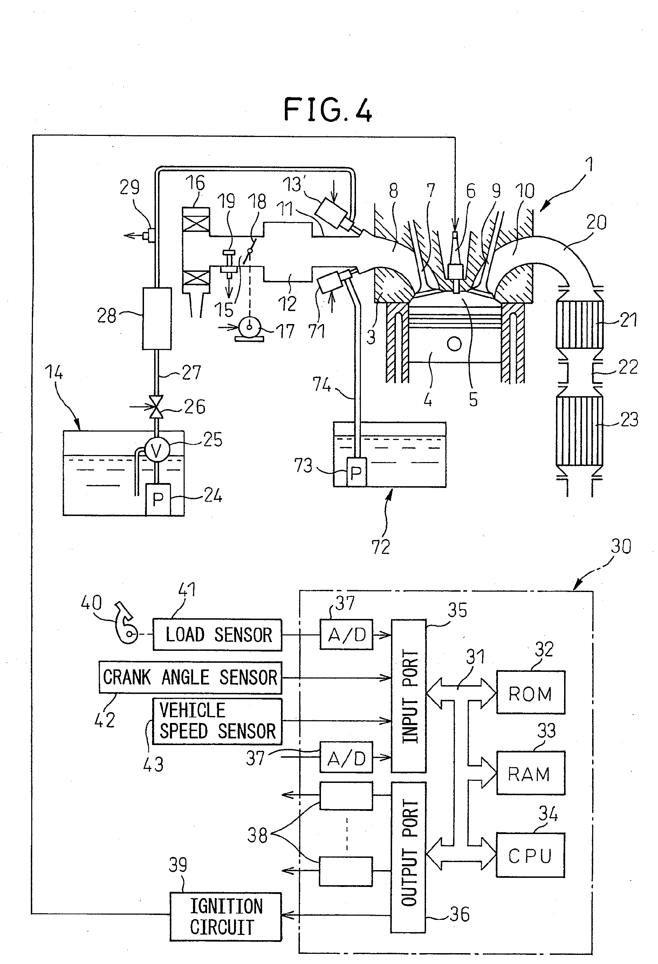

FIG. 4 is an example of an internal combustion engine when ammonia and non-ammonia fuel is fed into the combustion chamber 5. In the example shown in FIG. 4, a case is shown of using as non-ammonia fuel, fuel that is ignited by a spark, for example, gasoline. In the example shown in FIG. 4, in the intake branch pipes 11, there is arranged a non-ammonia fuel injector 71 for injecting gasoline toward the corresponding intake port 8. Non-ammonia fuel is fed into this non-ammonia fuel injector 71 from a non-ammonia fuel storage tank 72. Inside the non-ammonia storage tank 72, there is arranged a non-ammonia fuel feed pump 73. The discharge outlet of this non-ammonia fuel feed pump 73 is connected through a non-ammonia fuel feed pipe (non-ammonia fuel feed passage) 74 to a non-ammonia fuel injector 71. Note that, the non-ammonia fuel injector may be arranged on the cylinder head 3 and inject non-ammonia fuel toward the corresponding combustion chamber 5.

Note that, the following embodiments and modifications explain an ammonia burning internal combustion engine that injects liquid ammonia toward a combustion chamber 5 and ignites the air-fuel mixture with an ignition device 6 wherein said ammonia burning internal combustion engine injects only liquid ammonia as fuel. However, in the following embodiments and modifications, various modifications are possible similar to the above embodiment.

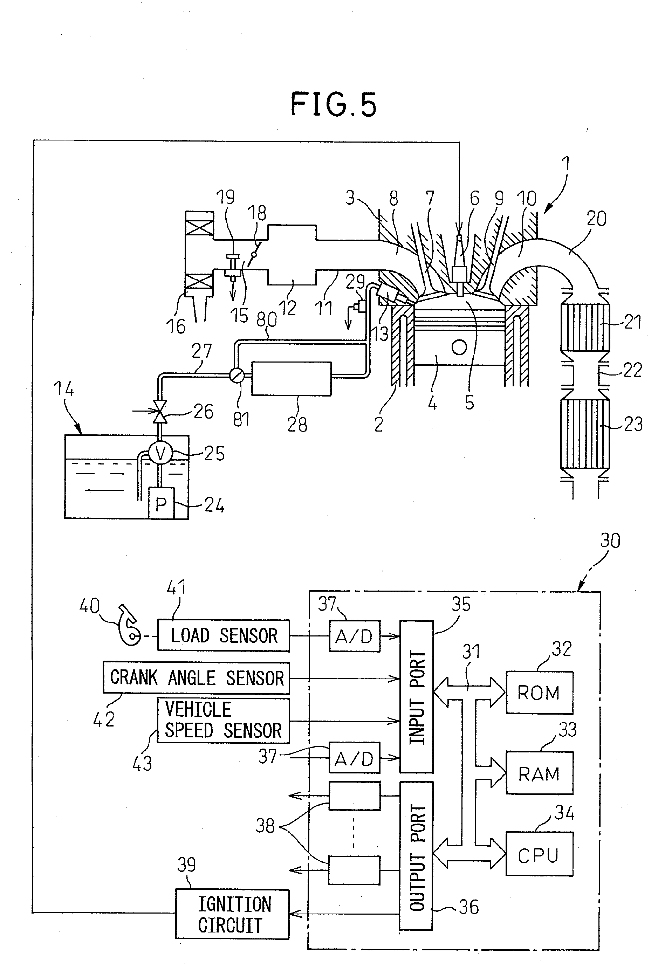

Next, referring to FIG. 5, an ammonia burning internal combustion engine of a second embodiment of the present invention will be explained. The configuration of the ammonia burning internal combustion engine of the present embodiment shown in FIG. 5 is basically the same as the configuration of the ammonia burning internal combustion engine of the first embodiment, therefore explanation of similar components will be omitted.

As shown in FIG. 5, the internal combustion engine of the present embodiment is provided with a bypass pipe 80 branching off from the ammonia feed pipe 27 upstream of the heat exchanger 28 and a flow rate control valve 81 provided at the branching part of the bypass pipe 80 from the ammonia feed pipe 27. The bypass pipe 80 can bypass the heat exchanger 28. The bypass pipe 80 converges with the ammonia feed pipe 27 downstream of the heat exchanger 28. A temperature sensor 29 is arranged at the ammonia feed pipe 27 downstream of the converging part of the bypass pipe 80 to the ammonia feed pipe 27. Further, the flow rate control valve 81 can regulate the flow rate of ammonia flowing into the heat exchanger 28 and bypass pipe 80. From another point of view, it can be said that the flow rate control valve 81 enables the ratio of the flow rate of ammonia flowing into the bypass pipe 80 to the flow rate of ammonia flowing into the heat exchanger 28 to be regulated.

In this respect, as explained above, because the latent heat of vaporization of ammonia is large, it is necessary to raise temperature of the ammonia before feeding it to the ammonia injector 13, but conversely if the temperature of the ammonia fed to the ammonia injector 13 is too high, bubbles form inside the liquid ammonia, whereby amount of the ammonia injected from the ammonia injector 13 ends up being unable to be controlled appropriately. Therefore, to inject ammonia appropriately from the ammonia injector 13 and burn ammonia inside the combustion chamber 5 well, it is necessary for the temperature of ammonia fed to the ammonia injector 13 to be maintained within a constant range higher than ordinary temperature.

Further, the same can be said in a case of injecting gaseous ammonia from the ammonia injector 13. That is, if the temperature of ammonia fed to the ammonia injector 13 becomes too high when injecting gaseous ammonia from the ammonia injector 13, the density of ammonia falls and, as a result, the amount of ammonia fed into the combustion chamber 5 ends up being reduced. Therefore, to appropriately inject ammonia from the ammonia injector 13, it is necessary for the temperature of ammonia fed to the ammonia injector 13 to be maintained within a constant range higher than ordinary temperature.

Here, the ammonia flowing through the heat exchanger 28 has a high temperature because it is raised in temperature at the heat exchanger 28. On the other hand, the ammonia flowing through the bypass pipe 80 does not pass through the heat exchanger 28, so is not raised in temperature and therefore has a low temperature. Thus, in the present embodiment, when the temperature of ammonia flowing into the ammonia injector 13 is high, the flow rate of ammonia flowing into the heat exchanger 28 is made to decrease and the flow rate of ammonia flowing into the bypass pipe 80 is made to increase. When the temperature of the ammonia flowing into the ammonia injector 13 is low, the flow rate of ammonia flowing into the heat exchanger 28 is made to increase and the flow rate of ammonia flowing into the bypass pipe 80 is made to decrease. Due to this, the temperature of ammonia flowing into the ammonia injector 13 can be appropriately controlled.

Specifically, when the temperature of the ammonia detected by the temperature sensor 29 is higher than a predetermined target temperature (or target temperature range), the flow rate control valve 81 is controlled so as to reduce the flow rate of ammonia flowing into the heat exchanger 28 (or so that the rate of ammonia flowing into the heat exchanger 28 falls). Conversely, when the temperature of ammonia detected by the temperature sensor 29 is lower than the target temperature, the flow rate control valve 81 is controlled so as to increase the flow rate of ammonia flowing into the heat exchanger 28 (or so that the ratio of ammonia flowing into the heat exchanger 28 rises). Due to this, the temperature of ammonia flowing into the ammonia injector 13 can be maintained in the vicinity of a target temperature or the vicinity of a target temperature range.

To give a more generalized explanation, the present embodiment can be said to comprise an ammonia burning internal combustion engine provided with a temperature detection device detecting the temperature of ammonia fed to an ammonia feed device or ammonia flowing from a temperature/pressure raising system (heat exchanger 28 or a later explained engine cooling passage of the engine body 1, vehicular air-conditioning system, etc.), a bypass passage bypassing the temperature/pressure raising system, and a flow rate control valve able to regulate the flow rate of ammonia flowing into the temperature/pressure raising system and bypass passage, wherein the flow rate of ammonia flowing into the temperature/pressure raising system is controlled based on the temperature detected by the temperature detection device.

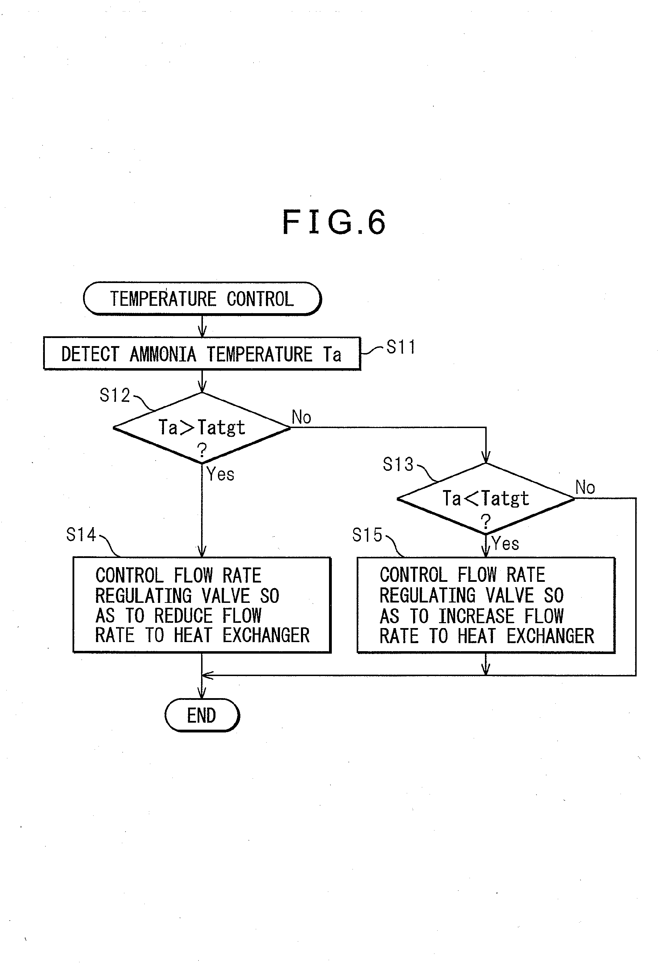

FIG. 6 is a flow chart of a control routine for controlling the temperature of ammonia flowing into the ammonia injector 13. The control routine shown in the drawing is executed by interruption every certain time interval.

In the control routine shown in FIG. 6, first, at step 511, the temperature sensor 29 is used to detect the temperature Ta of the ammonia flowing into the ammonia injector 13. Next, at steps S12 and S13, it is determined whether the temperature Ta of ammonia detected at step S11 is higher or lower than a target temperature Tatgt or almost the same as the target temperature Tatgt. When it is determined at steps S12 and S13 that the temperature Ta of ammonia is higher than the target temperature Tatgt, the routine proceeds to step S14. At step S14, the flow rate control valve 81 is controlled so as to reduce the flow rate of ammonia flowing into the heat exchanger 28, whereby the temperature of the ammonia flowing into the ammonia injector 13 is made to fall. On the other hand, when it is determined at steps S12 and S13 that the temperature Ta of ammonia is lower than the target temperature Tatgt, the routine proceeds to step S15. At step S15, the flow rate control valve 81 is controlled so as to increase the flow rate of ammonia flowing into the heat exchanger 28, whereby the temperature of the ammonia flowing into the ammonia injector 13 is made to rise. Further, when it is determined at steps S12 and S13 that the temperature Ta of the ammonia is about the same as the target temperature Tatgt, the flow rate control valve 81 is maintained in that state.

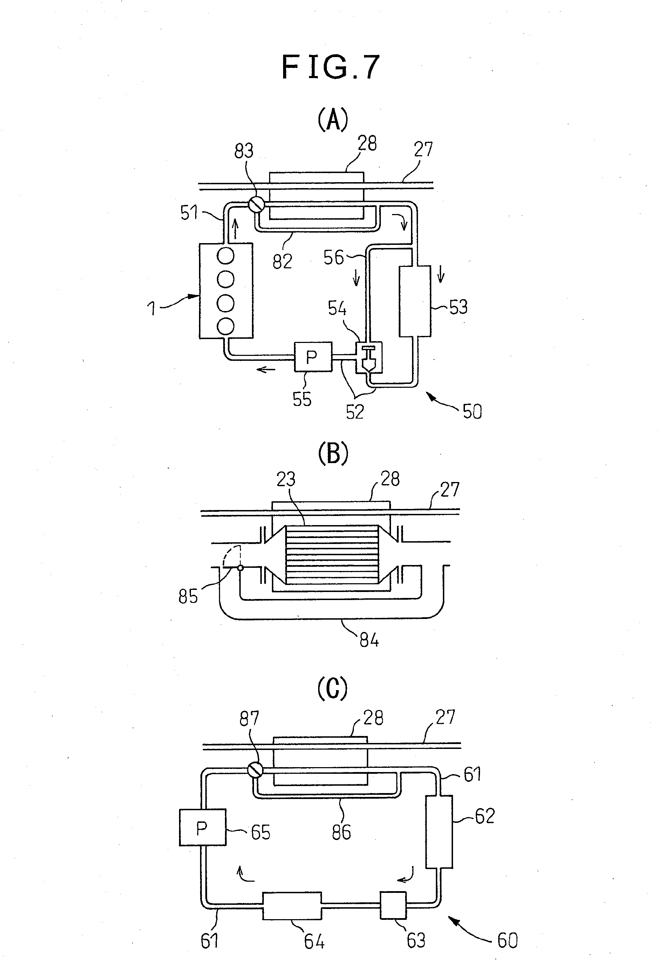

Next, referring to FIG. 7, modifications of the second embodiment will be explained. In the example shown in FIG. 7(A), the cooling system 50 shown in FIG. 2(A) is provided with a bypass pipe 82 bypassing the heat exchanger 28 and a flow rate control valve 83 controlling the flow rate of cooling water flowing into the bypass pipe 82. Further, in the example shown in FIG. 7(B), the exhaust system shown in FIG. 2(B) is provided with a bypass pipe 84 bypassing the downstream exhaust gas purification system 23 and a flow rate control valve 85 controlling the flow rate of exhaust gas flowing into the bypass pipe 84. Further, in the example shown in FIG. 7(C), the vehicular air-conditioning system 60 shown in FIG. 2(C) is provided with a bypass pipe 86 bypassing the heat exchanger 28 and a flow rate control valve 87 controlling the flow rate of cooling medium flowing into the bypass pipe 86.

These bypass pipes 82, 84, and 86 can bypass the heat exchanger (the downstream exhaust gas purification system in FIG. 7(B)) 28. Further, the flow rate control valves 83, 85, and 87 can regulate the flow rate of thermal fluid (cooling water, exhaust gas, cooling medium) flowing into the heat exchanger 28 and therefore can regulate at the same time the flow rate of thermal fluid flowing into the bypass pipes 82, 84, and 86. That is, it can be said that the flow rate control valves 83, 85, and 87 regulate the ratio of the flow rate of the thermal fluid flowing into the heat exchanger 28 to the flow rate of the thermal fluid flowing into the bypass pipes 82, 84, and 86.

Here, the heat amount added to the ammonia at the heat exchanger 28 changes depending on the flow rate of the fluid (cooling water, exhaust gas, cooling medium, etc.) flowing into the heat exchanger 28. For example, when the flow rate of thermal fluid flowing into the heat exchanger 28 is large, the heat amount transferred from the thermal fluid to the ammonia at the heat exchanger 28 is large. As a result, the temperature of ammonia flowing out from the heat exchanger 28 becomes high. On the other hand, when the flow rate of thermal fluid flowing into the heat exchanger 28 is low, the heat amount transferred from the thermal fluid to the ammonia at the heat exchanger 28 is low. As a result, the temperature of ammonia flowing out from the heat exchanger 28 becomes low.

Thus, in the present modification, when the temperature of ammonia flowing into the ammonia injector 13 is high, the flow rate of thermal fluid flowing into the heat exchanger 28 is made to decrease. On the other hand, when the temperature of ammonia flowing into the ammonia injector 13 is low, the flow rate of thermal fluid flowing into the heat exchanger 28 is made to increase. Due to this, the temperature of ammonia flowing into the ammonia injector 13 can be appropriately controlled.

Specifically, when the temperature of ammonia detected by the temperature sensor 29 is higher than the predetermined target temperature (or target temperature range), the flow rate control valves 83, 85, and 87 are controlled so as to increase the flow rate of thermal fluid flowing into the heat exchanger 28. Conversely, when the temperature of ammonia detected by the temperature sensor 29 is lower than the predetermined target temperature, the flow rate control valves 83, 85, and 87 are controlled so as to reduce the flow rate of the thermal fluid flowing into the heat exchanger 28. Due to this, the temperature of the ammonia flowing into the ammonia injector 13 can be maintained in the vicinity of the target temperature or the vicinity of the target temperature range.

Alternatively, the bypass pipes 82, 84, and 86 and flow rate control valves 83, 85, and 87 may be omitted and the flow rate of thermal fluid flowing into the heat exchanger 28 may be controlled by controlling the output of the water pump 55 or air-conditioner compressor 65. In this case, when the temperature of ammonia flowing into the ammonia injector 13 is high, the output of the water pump 55 or air-conditioner compressor 65 is made to fall to reduce the flow rate of the thermal fluid, and when the temperature of the ammonia flowing into the ammonia injector 13 is low, the output of the water pump 55 or air-conditioner compressor 65 is raised to increase the flow rate of the thermal fluid. By doing this as well, the temperature of ammonia flowing into the ammonia injector 13 can be appropriately controlled.

In summary, in the present modification, the heat amount transferred from the thermal fluid to the ammonia at the heat exchanger 28 is feedback controlled based on the temperature of the ammonia flowing into the ammonia injector 13, that is, the temperature of ammonia detected by the temperature sensor 29, whereby the temperature of ammonia flowing into the ammonia injector 13 can be controlled to an appropriate temperature.

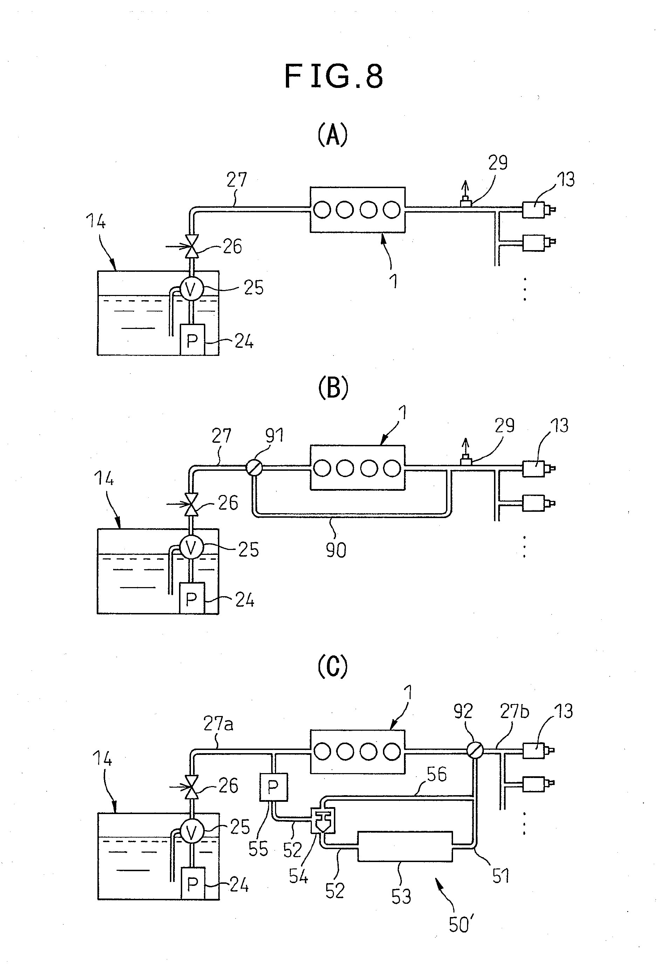

Next, referring to FIG. 8, an ammonia burning internal combustion engine of a third embodiment of the present invention will be explained. The configuration of the ammonia burning internal combustion engine of the present embodiment is basically the same as the configuration of the ammonia burning internal combustion engine of the first embodiment and second embodiment, therefore explanation of similar components will be omitted.

FIG. 8 is a view schematically showing fuel feed systems of the internal combustion engine in the present embodiment. As shown in FIG. 8(A), in the internal combustion engine of the present embodiment, an engine cooling passage of the engine body 1 is provided at the ammonia feed pipe 27 in place of the heat exchanger 28. Therefore, the ammonia fed as fuel to the ammonia injector 13 robs heat from the engine body 1 and thereby cools the engine body 1 while passing through the engine cooling passage of the engine body 1 and is raised in temperature along with this. From another point of view, in the present embodiment, the ammonia fed to the ammonia injector 13 is used as a cooling medium for cooling the engine body 1 in place of cooling water.

Due to this, in the present embodiment, the ammonia fed to the ammonia injector 13 can be made to rise in temperature. Further, in the present embodiment, the temperature of the ammonia is raised by the heat of the engine body 1, so the temperature of the ammonia can be said to be raised by the energy produced along with the operation of the internal combustion engine. In particular, in the present embodiment, the heat normally released into the atmosphere through the cooling water is used to heat the ammonia, so a high energy efficiency can be maintained for the internal combustion engine as a whole while raising the temperature of the ammonia.

Note that, in the above embodiment, as the cooling medium cooling the engine body 1, ammonia is used in place of cooling water. However, the engine body 1 may also be cooled with two cooling media - cooling water and ammonia, that is, ammonia may be made to pass through only part of the engine cooling passage of the engine body 1. In this case, the engine cooling passage of the engine body 1 is split into a cooling water passage and an ammonia passage and configured so that the cooling water and ammonia are never mixed.

FIG. 8(B) shows a fuel feed system different from the fuel feed system shown in FIG. 8(A). In the example shown in FIG. 8(B), an engine cooling passage of the engine body 1 is provided at the ammonia feed pipe 27 as shown in FIG. 8(A) and a bypass pipe 90 branching from the ammonia feed pipe 27 upstream of the engine cooling passage of the engine body 1 and a flow rate control valve 91 controlling the flow rate of ammonia flowing into the engine cooling passage of the engine body 1 and the bypass pipe 90 are provided. The bypass pipe 90 is configured so as to bypass the engine cooling passage of the engine body 1. The temperature sensor 29 is arranged at the ammonia feed pipe 27 downstream of the converging part of the bypass pipe 90 to the ammonia feed pipe 27.

In the thus configured example shown in FIG. 8(B), when the temperature of ammonia flowing into the ammonia injector 13 is high, the flow rate of ammonia flowing into the engine cooling passage of the engine body 1 is made to decrease and the flow rate of ammonia flowing into the bypass pipe 90 is made to increase. When the temperature of ammonia flowing into the ammonia injector 13 is low, the flow rate of ammonia flowing into the engine cooling passage of the engine body 1 is made to increase, and the flow rate of ammonia flowing into the bypass pipe 90 is made to decrease. Due to this, the temperature of ammonia flowing into the ammonia injector 13 can be appropriately controlled.

Specifically, when the temperature of ammonia detected by the temperature sensor 29 is higher than a predetermined target temperature (or, target temperature range), the flow rate control valve 91 is controlled so as to increase the flow rate of ammonia flowing into the engine cooling passage of the engine body 1. When the temperature of ammonia detected by the temperature sensor 29 is lower than the above target temperature on the other hand, the flow rate control valve 91 is controlled so as to reduce the flow rate of ammonia flowing into the engine cooling passage of the engine body 1. Due to this, the temperature of ammonia flowing into the ammonia injector 13 can be maintained in the vicinity of the target temperature or the vicinity of the target temperature range.

FIG. 8(C) shows a fuel feed system different from the fuel feed systems shown in FIGS. 8(A) and 8(B). In the example shown in FIG. 8(C), in the middle of the ammonia feed pipe 27, a cooling system 50' similar to the cooling system 50 of the internal combustion engine shown in FIG. 2(A) is provided. However, in the cooling system 50' shown in FIG. 8(C), the cooling medium used is not cooling water, but ammonia.

As shown in FIG. 8(C), the upstream ammonia feed pipe 27a connected to the fuel tank 14 is coupled to the downstream communicating pipe 52 of the cooling system 50', particularly, the downstream communicating pipe 52 between the water pump 55 and the engine cooling passage of the engine body 1. Further, the downstream ammonia feed pipe 27b connecting to the ammonia injector 13 is coupled to the upstream communicating pipe 51 of the cooling system 50', particularly the upstream communicating pipe 51 between the engine cooling passage of the engine body 1 and the radiator 53. At the coupling part of the downstream ammonia feed pipe 27b and upstream communicating pipe 51, there is provided a flow rate control valve 92 controlling the flow rate of the ammonia flowing into the ammonia injector 13 and the flow rate of the ammonia circulating inside the cooling system 50'.

In such a configured fuel feed system, the ammonia flowing out from the fuel tank 14 flows through the upstream ammonia feed pipe 27a into the downstream communicating pipe 52 of the cooling system 50'. The ammonia flowing into the cooling system 50' circulates inside the cooling system 50' in the order of the engine cooling passage of the engine body 1, the radiator 53 (or the bypass pipe 56), the thermostat 54, and the water pump 55, whereby the engine body 1 is cooled.

Further, a portion of the ammonia circulating inside the cooling system 50', when passing through the flow rate control valve 92, flows into the downstream ammonia feed pipe 27b, that is, ammonia injector 13, depending on the position of the flow rate control valve 92. The ammonia flowing into the flow rate control valve 92 flowed in immediately after passing through the engine cooling passage of the engine body 1, so it robs the heat of the engine body 1 and becomes high in temperature. Therefore, the ammonia flowing through the flow rate control valve 92 from the upstream communicating pipe 51 to the downstream ammonia feed pipe 27b then flowing to the ammonia injector 13 is high in temperature. Therefore, in the example shown in FIG. 8(C), the ammonia fed from the fuel tank 14 is made to rise in temperature when passing through the cooling system 50'.

Note that, in the example shown in FIG. 8(C), the upstream ammonia feed pipe 27a is coupled to the downstream communicating passage 52 between the water pump 55 and the engine cooling passage of the engine body 1, however, it may be coupled to the downstream communicating passage 52 between the thermostat 54 and the water pump 55 as well. In this case, the ammonia can be fed from inside the fuel tank 24 by the water pump 55, so the ammonia feed pump 24 may be omitted.

Further, the fuel feed system shown in FIG. 8(C) may be provided with a bypass pipe bypassing the cooling system 50' and be configured so as to control the flow rate of ammonia flowing into the cooling system 50' and the bypass pipe. In such a configured fuel feed system, the temperature of ammonia flowing into the ammonia injector 13 can be maintained in the vicinity of the target temperature or vicinity of the target temperature range.

In summary, in the present embodiment, as the cooling medium of the cooling device (the engine cooling passage of the engine body 1 and cooling system 50') cooling the internal combustion engine, the ammonia used as fuel is used. Due to this, the ammonia is made to rise in temperature along with the cooling of the internal combustion engine. Particularly, in the present embodiment, the heat normally released into the atmosphere is used to heat the ammonia, so a high energy efficiency can be maintained for the internal combustion engine as a whole while raising the temperature of the ammonia.

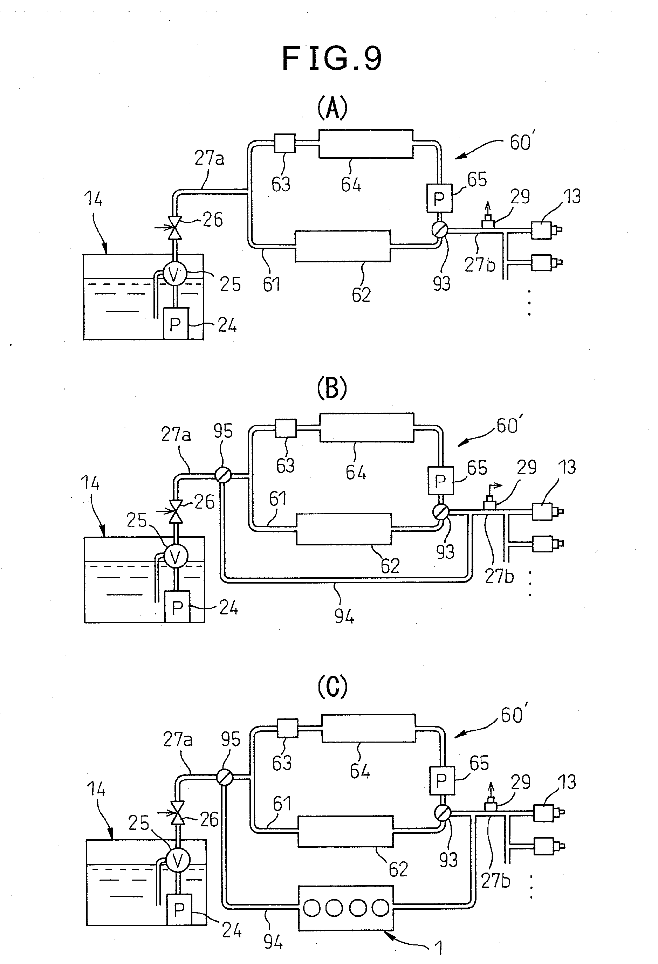

Next, referring to FIG. 9, an ammonia burning internal combustion engine of a fourth embodiment of the present invention will be explained. The configuration of the ammonia burning internal combustion engine of the present embodiment shown in FIG. 9 is basically the same as the configuration of the ammonia burning internal combustion engine of the first to third embodiments, therefore explanation of similar components will be omitted.

FIG. 9 is a view schematically showing fuel feed systems of the internal combustion engine in the present embodiment. As shown in FIG. 9(A), in the internal combustion engine of the present embodiment, in the middle of the ammonia feed pipe 27, there is provided a vehicular air-conditioning system 60' as shown in FIG. 2(C). In particular, in the vehicular air-conditioning system 60' shown in FIG. 9(A), the cooling medium used is ammonia.

As shown in FIG. 9(A), the upstream ammonia feed pipe 27a connected to the fuel tank 14 is coupled to the circulation passage 61 between the condenser 62 of the vehicular air-conditioning system 60' and the expansion valve 63. Further, the downstream ammonia feed pipe 27b connected to the ammonia injector 13 is coupled to the circulation passage 61 between the air-conditioner compressor 65 of the vehicular air-conditioning system 60' and the condenser 62. At the coupled part of the downstream ammonia feed pipe 27b and the circulation passage 61, there is provided a flow rate control valve 93 controlling the flow rate of ammonia flowing through the downstream ammonia feed pipe 27b into the ammonia injector 13 and the flow rate of ammonia circulating inside the vehicular air-conditioning system 60'.

In such a fuel feed system, the ammonia flowing out from the fuel tank 14 flows through the upstream ammonia feed pipe 27a into the circulation passage 61 of the vehicular air-conditioning system 60'. The ammonia flowing into the vehicular air-conditioning system 60' circulates inside the vehicular air-conditioning system 60' in the order of the expansion valve 63, the evaporator 64, the air-conditioner compressor 65, and the condenser 62, whereby the passenger compartment is cooled.

Further, a portion of the ammonia circulating inside the vehicular air-conditioning system 60', when passing through the flow rate control valve 93, flows into the downstream ammonia feed pipe 27b, that is, ammonia injector 13, depending on the position of the flow rate control valve 63. The ammonia flowing into the flow rate control valve 92 flows in immediately after robbing the heat of the passenger compartment at the evaporator 64 and being raised in pressure and raised in temperature by the air-conditioner compressor 65, so its temperature becomes high. Therefore, the ammonia flowing through the flow rate control valve 93 from the circulation passage 61 into the downstream ammonia feed pipe 27b then flowing into the ammonia injector 13 is high in temperature. Therefore, in the example shown in FIG. 9(A), the ammonia fed from the fuel tank 14 is made to rise in temperature when passing through the vehicular air-conditioning system 60'.

In this way, in the present embodiment, by passing through the vehicular air-conditioning system 60', the ammonia fed to the ammonia injector 13 can be made to rise in temperature. Further, in the present embodiment, the ammonia is raised in pressure and raised in temperature by the air-conditioner compressor 65 driven mechanically or electrically by the output of the internal combustion engine, so it can be said that the ammonia is raised in temperature by the energy produced along with the operation of the internal combustion engine. In particular, in the present embodiment, the heat normally released into the atmosphere through the cooling medium is used to heat the ammonia, so high energy efficiency can be maintained for the internal combustion engine as a whole while raising the temperature of the ammonia.

FIG. 9(B) shows a fuel feed system different from the fuel feed system shown in FIG. 9(A). In the example shown in FIG. 9(B), a vehicular air-conditioning system 60' is provided in the middle of the ammonia feed pipe 27 as shown in FIG. 9(A), and a bypass pipe 94 branching from the ammonia feed pipe 27 upstream of the vehicular air-conditioning system 60' and a flow rate control valve 95 controlling the flow rate of ammonia flowing into the vehicular air-conditioning system 60' are provided. The bypass pipe 94 is configured so as to bypass the vehicular air-conditioning system 60'. The temperature sensor 29 is arranged at the downstream ammonia feed pipe 27b downstream of the converging part of the bypass pipe 94 to the downstream ammonia feed pipe 27b.

In such a configured example shown in FIG. 9(B), when the temperature of ammonia flowing into the ammonia injector 13 is high, the flow rate of ammonia flowing into the vehicular air-conditioning system 60' is made to decrease and the flow rate of ammonia flowing into the bypass pipe 94 is made to increase. When the temperature of ammonia flowing into the ammonia injector 13 is low, the flow rate of ammonia flowing into the vehicular air-conditioning system 60' is made to increase and the flow rate of ammonia flowing into the bypass pipe 94 is made to decrease. Due to this, the temperature of ammonia flowing into the ammonia injector 13 can be appropriately controlled.

Specifically, when the temperature of ammonia detected by the temperature sensor 29 is higher than a predetermined target temperature (or target temperature region), the flow rate control valve 95 is controlled so as to reduce the flow rate of ammonia flowing into the vehicular air-conditioning system 60'. Conversely, when the temperature of the ammonia detected by the temperature sensor 29 is lower than the above target temperature, the flow rate control valve 95 is controlled so as to increase the flow rate of ammonia flowing into the vehicular air-conditioning system 60'. Due to this, the temperature of ammonia flowing into the ammonia injector 13 can be maintained in the vicinity of the target temperature or the vicinity of the target temperature range.

FIG. 9(C) shows a fuel feed system different from the fuel feed systems shown in FIG. 9(A) and FIG. 9(B). In the example shown in FIG. 9(C), at the bypass pipe 94 of FIG. 9(B), there is provided an engine cooling passage of the engine body 1.

In this regard, the passenger compartment is not constantly cooled by the vehicular air-conditioning system 60' during engine operation, but is cooled in response to requests from the passengers in the passenger compartment. Therefore, sometimes the vehicular air-conditioning system 60' does not have to be driven even during engine operation. However, in the examples shown in FIG. 9(A) and FIG. 9(B), even when passengers in the passenger compartment do not request operation of the vehicular air-conditioning system 60', the vehicular air-conditioning system 60' must be driven in order to raise the temperature of the ammonia fed to the ammonia injector 13 constantly during the engine operation. This causes a fall in energy efficiency.

As opposed to this, in the example shown in FIG. 9(C), the engine cooling passage of the engine body 1 is provided at the bypass pipe 94 bypassing the vehicular air-conditioning system 60'. Therefore, in cases when there is no request from passengers in the passenger compartment to cool the passenger compartment by the vehicular air-conditioning system 60', the vehicular air-conditioning system 60' is made to stop, and the ammonia flowing out from the fuel tank 14 is not made to flow into the vehicular air-conditioning system 60', but is made to flow into the bypass pipe 94, that is, into the engine cooling passage of the engine body 1. Due to this, when the vehicular air-conditioning system 60' is driven, ammonia is raised in temperature by the vehicular air-conditioning system 60', while when the vehicular air-conditioning system 60' is not driven, ammonia passes through the engine cooling passage of the engine body 1 whereby it is raised in temperature. Due to this, the ammonia can be raised in temperature without causing a fall in energy efficiency.

Note that, in the above embodiment, the engine cooling passage of the engine body 1 is provided at the bypass pipe 94, however, a cooling system 50' as shown in FIG. 8(C) may also be provided at the bypass pipe 94. Further, the fuel feed system shown in FIG. 9(C) may be provided with an additional bypass pipe bypassing both the vehicular air-conditioning system 60' and the engine cooling passage of the engine body 1, and the flow rate of ammonia flowing into this additional bypass pipe and the flow rate of ammonia flowing into the vehicular air-conditioning system 60' or the engine cooling passage of the engine body 1 may be controlled. In such a configured fuel feed system, the temperature of the ammonia flowing into the ammonia injector 13 can be maintained in the vicinity of the target temperature or the vicinity of the target temperature region.

In summary, in the present embodiment, as the cooling medium of the vehicular air-conditioning system cooling the passenger compartment of the vehicle mounted with the internal combustion engine, the ammonia used as fuel is used. Due to this, the ammonia is made to rise in temperature along with the cooling of the passenger compartment of the vehicle. Particularly, in the present embodiment as well, the heat normally released into the atmosphere is used to heat the ammonia, so a high energy efficiency can be maintained for the internal combustion engine as a whole while raising the temperature of the ammonia. Further, in the present embodiment, the vehicular air-conditioning system is provided with an air-conditioner compressor pressurizing/raising the temperature of the cooling medium, so ammonia fed to the ammonia injector 13 can be raised in pressure.

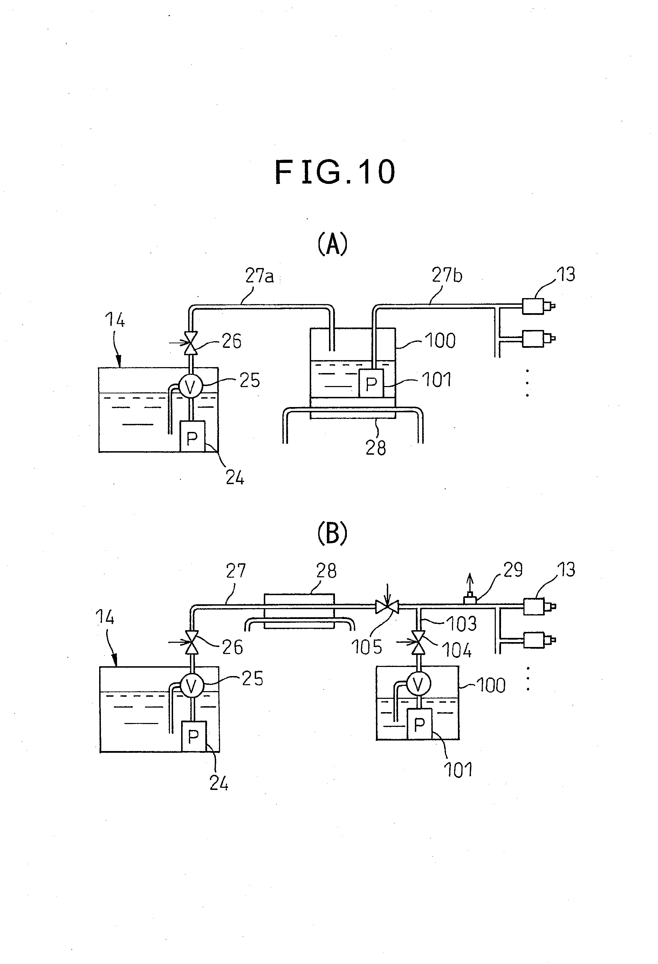

Next, referring to FIG. 10, an ammonia burning internal combustion engine of a fifth embodiment of the present invention will be explained. The configuration of the internal combustion engine of the present embodiment shown in FIG. 10 is basically similar to the configuration of the internal combustion engine of the first to fourth embodiments, therefore explanations of similar components will be omitted.

FIG. 10 is a view schematically showing fuel feed systems of the internal combustion engine in the present embodiment. As shown in FIG. 10(A), in the internal combustion engine of the present embodiment, an insulating heat storage container 100 is provided at the middle of the ammonia feed pipe 27. That is, the upstream ammonia feed pipe 27a connected to the fuel tank 14 is coupled to the heat storage container 100. Inside this heat storage container 100, there is provided a heat storage container feed pump 101. This heat storage container feed pump 101 feeds ammonia stored inside the heat storage container 100 to the downstream ammonia feed pipe 27b and, as a result, to the ammonia injector 13. In such a configured fuel feed system, the ammonia flowing out from the fuel tank 14 flows through the upstream ammonia feed pipe 27a and into the heat storage container 100 temporarily. The ammonia inside the heat storage container 100 is fed by the heat storage container feed pump 101 through the downstream ammonia feed pipe 27b to the ammonia injector 13.

In the heat storage container 100, there is arranged a heat exchanger 28. This heat exchanger 28, like the heat exchangers shown in FIG. 2(A) to FIG. 2(C), performs heat exchange between the thermal fluid having a higher temperature than the temperature of the ammonia inside the fuel tank 14, that is, thermal fluid having a temperature higher than the atmospheric temperature or ordinary temperature, and the ammonia stored inside the heat storage container 100.

In such a configured fuel feed system, the ammonia flowing inside the heat storage container 100 is made to be heated by the heat exchanger 28. Therefore, during normal operation of the internal combustion engine, the ammonia flowing out from the fuel tank 14 is heated inside the heat storage container 100 by the heat exchanger 28, then the high temperature ammonia is fed from the heat storage container 100 into each ammonia injector 13.

In this regard, as shown in FIG. 2(A) to FIG. 2(C), when using a thermal fluid which reaches a high temperature during engine operation so as to raise the temperature of the ammonia, the temperature of the thermal fluid often is low at the time of startup of the internal combustion engine. Therefore, when using a thermal fluid reaching a high temperature during operation of the internal combustion engine to raise the temperature of the ammonia, at the time of startup of the internal combustion engine, sometimes the ammonia cannot be raised in temperature by the thermal fluid. Thus, in the present embodiment, the ammonia raised in temperature by the thermal fluid during operation of the internal combustion engine is made to flow into the heat storage container 100. When the operation of the internal combustion engine is stopped, the high temperature ammonia is stored inside the heat storage container 100. When the internal combustion engine starts up next, the high temperature ammonia stored inside the heat storage container 100 is fed to the ammonia injector 13.

Explaining this in more detail, when the operation of the internal combustion engine is stopped, high temperature ammonia is stored inside the heat storage container 100. As explained above, the heat storage container 100 is an insulating container, so the high temperature ammonia stored inside the heat storage container 100 when the operation of the internal combustion engine is stopped is maintained at a high temperature as it is. Therefore, when starting up the internal combustion engine again after the internal combustion engine operation is stopped, the temperature of the ammonia inside the heat storage container 100 is comparatively high and at least higher than the temperature of the ammonia inside the fuel tank 14. Thus, when restarting the internal combustion engine, by feeding the high temperature ammonia inside the heat storage container 100 to the ammonia injector 13, high temperature ammonia can be fed to the ammonia injector 13 from the time of startup of the internal combustion engine.

Note that, in the example shown in FIG. 10(A), the heat exchanger 28 is arranged at the heat storage container 100, however, the heat exchanger 28 may be arranged at the ammonia feed pipe 27 upstream of the heat storage container 100 as well. In such a case as well, the high temperature ammonia is stored inside the heat storage container 100 during the operation of the internal combustion engine, and the high temperature ammonia inside the heat storage container 100 is fed to the ammonia injector 13 when the internal combustion engine is restarted after stopping. Due to this, high temperature ammonia can be fed to the ammonia injector 13 from the time of startup of the internal combustion engine.

FIG. 10(B) shows a fuel feed system different from the fuel feed system shown in FIG. 10(A). In the example shown in FIG. 10(B), a branch pipe 103 branches off the ammonia feed pipe 27. The branch pipe 103 is provided with the heat storage container 100. Inside this heat storage container 100, the heat storage container feed pump 101 is provided. This heat storage container feed pump 101 is coupled to the branch pipe 103. On the other hand, the branch pipe 103 is provided with a control valve 104 which controls the flow rate of ammonia flowing inside the branch pipe 103. Further, at the ammonia feed pipe 27 upstream of the branching part of the branch pipe 103, there is provided a control valve 105 controlling the flow rate of ammonia flowing through the inside of the ammonia feed pipe 27. Through these control valves 104 and 105, it is possible to control the ratio of the flow rate of ammonia fed from the fuel tank 14 to the flow rate of ammonia fed from the heat storage container 100 in the ammonia fed to the ammonia injector 13. That is, these control valves 104 and 105 act as flow rate ratio control valves controlling the ratio of the flow rate of ammonia fed from the fuel tank 14 to the ammonia injector 13 to the flow rate of ammonia fed from the heat storage container 100 to the ammonia injector 13. Further, at the ammonia feed pipe 27, there is provided a heat exchanger 28 upstream of the branching part of the branch pipe 103. By this heat exchanger 28, the ammonia flowing in the ammonia feed pipe 27 is made to rise in temperature.

In such a configured fuel feed system, during normal operation of the internal combustion engine, the ammonia inside the ammonia fuel tank 14 is raised in temperature by the heat exchanger 28, and the raised temperature ammonia is fed to the ammonia injector 13. Further, a portion of the ammonia raised in temperature by the heat exchanger 28 is fed into the heat storage container 100. Therefore, high temperature ammonia is stored inside the heat storage container 100.

After that, if the internal combustion engine is made to stop, the feed of ammonia to the ammonia injector 13 is made to stop. High temperature ammonia is stored inside the heat storage container 100. Since the heat storage container 100 is formed from an insulating material, even after the internal combustion engine is stopped, the temperature of the ammonia inside the heat storage container 100 is maintained as a comparatively high temperature. Next, when the internal combustion engine is made to start up again, ammonia from the heat storage container 100 alone or from both the heat storage container 100 and fuel tank 14 is fed to the ammonia injector 13. The feed ratio of ammonia from the heat storage container 100 and the fuel tank 14 at this time is controlled by the control valves 104, 105 so that the temperature of ammonia detected by the temperature sensor 29 becomes the target temperature or a temperature within the target temperature range. Due to this, even when restarting the internal combustion engine, ammonia having a high and appropriate temperature can be fed to the ammonia injector 13.

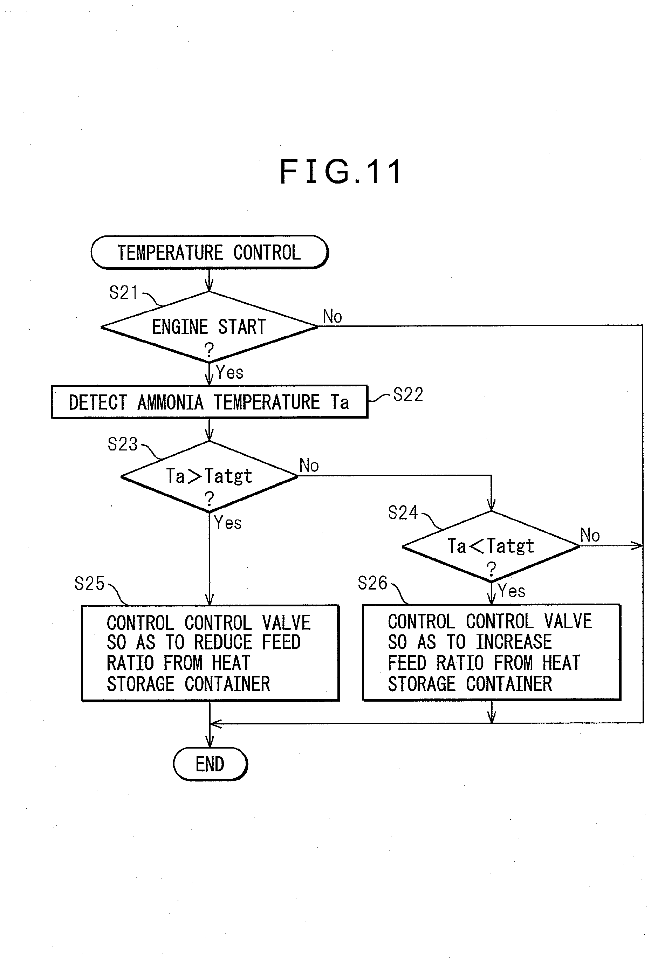

FIG. 11 is a flow chart of a control routine for controlling the temperature of ammonia flowing into the ammonia injector 13 in the example shown in FIG. 10(B). The control routine shown in the drawing is executed by interruption every certain time interval.

In the control routine shown in FIG. 11, first, at step S21, it is determined whether the internal combustion engine is starting up (more specifically, whether it is a certain time interval from startup of the internal combustion engine). If it is determined that the internal combustion engine is not starting up, the control routine is made to end. On the other hand, when it is determined at step S21 that the internal combustion engine is starting up, the routine proceeds to step S22. At step S22, the temperature Ta of ammonia flowing into the ammonia injector 13 is detected. Next, at steps S23 and S24, it is determined whether the temperature Ta of ammonia detected at step S22 is higher or lower than the target temperature Tatgt or almost the same as the target temperature Tatgt. When it is determined at steps S23 and S24 that the temperature Ta of ammonia is higher than the target temperature Tatgt, the routine proceeds to step S25. At step S25, the flow rate of fuel fed from the fuel tank 14 to the ammonia injector 13 is increased, and the flow rate of ammonia fed from the heat storage container 100 to the ammonia injector 13 is reduced. That is, at step S25, the opening degree of the control valve 105 is made large and the opening degree of the control valve 104 is made small. Due to this, when the internal combustion engine is starting up, the amount of high temperature ammonia inside the heat storage container 100 fed to the ammonia injector 13 is limited, therefore the temperature of ammonia fed to the ammonia injector 13 is made to fall.

On the other hand, when it is determined at steps S23 and S24 that the temperature Ta of ammonia detected at step S23 is lower than the target temperature Tatgt, the routine proceeds to step S26. At step S26, the flow rate of ammonia fed from the fuel tank 14 to the ammonia injector 13 is reduced, and the flow rate of ammonia fed from the heat storage container 100 to the ammonia injector 13 is increased. That is, at step S26, the opening degree of the control valve 105 is made small and the opening degree of the control valve 104 is made large. This thereby keeps the temperature of ammonia fed to the ammonia injector 13 from becoming too low when the internal combustion engine is starting up. Further, when it is determined at steps S23 and S24 that the temperature Ta of ammonia is almost the same as the target temperature Tatgt, the opening degrees of the control valves 104 and 105 are maintained as they are.

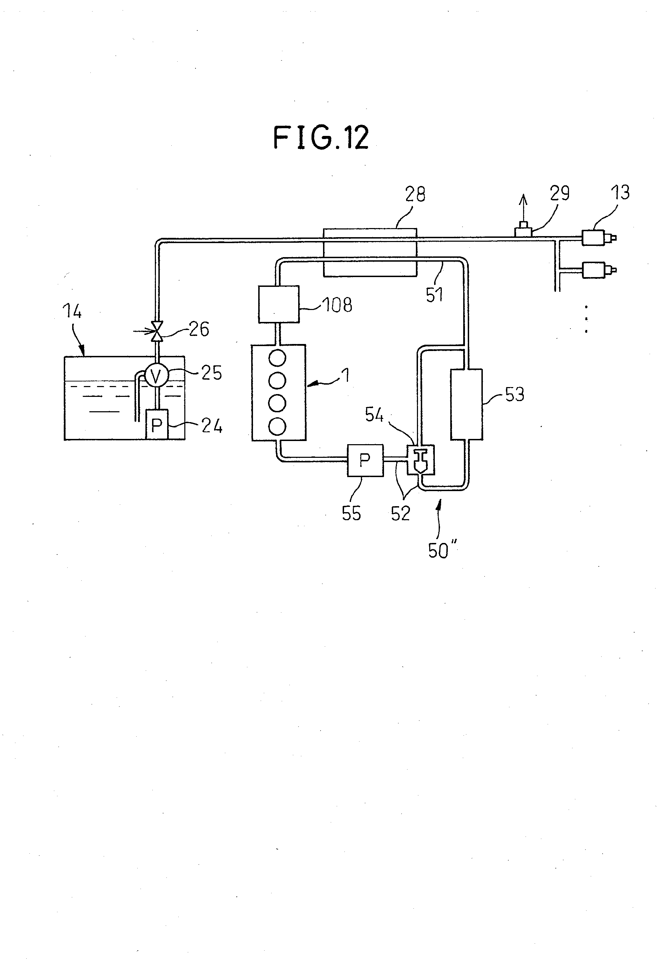

Next, referring to FIG. 12, a modification of the fifth embodiment will be explained. As shown in FIG. 12, there is provided a heat exchanger 28 of basically a similar configuration as the example shown in FIG. 2(A). That is, in the example shown in FIG. 12, heat exchange is performed between the ammonia and the cooling system 50" of the internal combustion engine.

However, in the example shown in FIG. 12, an insulating heat storage container 108 is provided between the engine cooling passage of the engine body 1 and the heat exchanger 28. Therefore, during normal operation of the internal combustion engine, high temperature cooling water flowing out from the engine cooling passage of the engine body 1 is temporarily stored inside the heat storage container 108, then flows into the heat exchanger 28. Therefore, during normal operation of the internal combustion engine, the high temperature cooling water is constantly stored inside the heat storage container 108.

On the other hand, if the internal combustion engine is made to stop, the circulation of cooling water inside the cooling system 50" is also made to stop along with it. At this time, high temperature cooling water is stored inside the heat storage container 108. In this way, the high temperature cooling water stored inside the heat storage container 108 is maintained at a comparatively high temperature as is because the heat storage container 108 is formed from an insulating material. Therefore, even when the internal combustion engine is made to restart, the ammonia stored inside the heat storage container 108 is a comparatively high temperature.

When the internal combustion engine is made to restart, the heat exchanger 28 is fed with comparatively high temperature cooling water stored inside the heat storage container 108. Therefore, the heat exchanger 28 is fed with comparatively high temperature cooling water immediately after the internal combustion engine is restarted, and, as a result, the temperature of the ammonia is raised by the heat exchanger 28 immediately after the internal combustion engine is restarted.

Note that, in the above embodiment, a case of the heat medium performing heat exchange at the heat exchanger 28 being cooling water was shown as an example, however, the invention is applicable also in cases when the heat medium used is a vehicular air-conditioning system cooling medium or other heating medium.

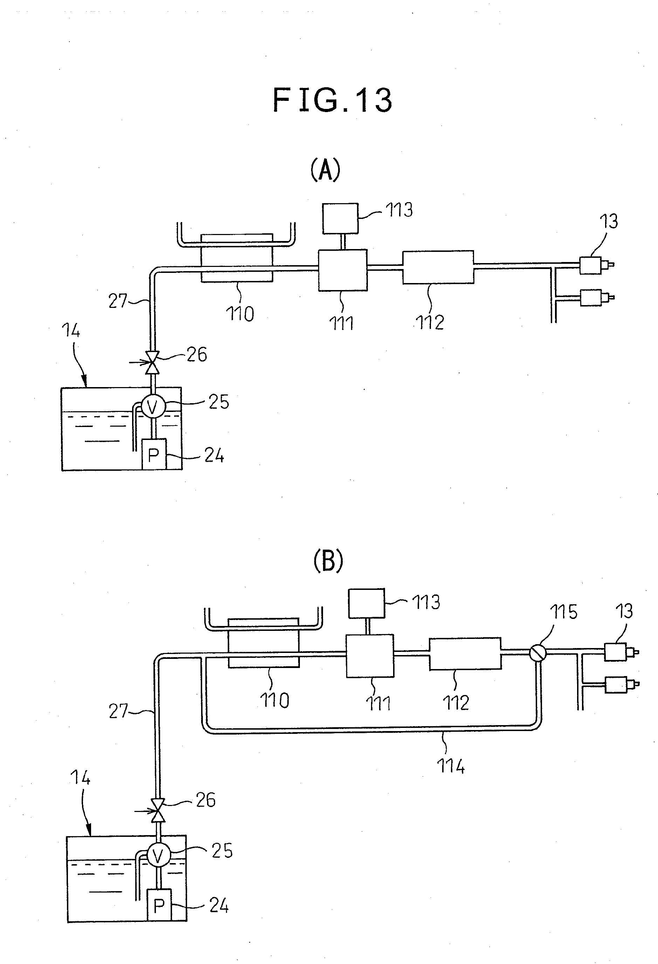

Next, referring to FIG. 13, an ammonia burning internal combustion engine of a sixth embodiment of the present invention will be explained. The configuration of the ammonia burning internal combustion engine of the present embodiment shown in FIG. 13 is basically the same as the configuration of the ammonia burning internal combustion engine of the first to fifth embodiments, therefore explanation of similar components will be omitted.

As shown in FIG. 13(A), in the present embodiment, a heat absorbing heat exchanger 110, expander 111, and heat releasing heat exchanger 112 are provided at the ammonia feed pipe 27. The heat absorbing heat exchanger 110 is a heat exchanger similar to the heat exchanger 28 shown in FIG. 1 and FIG. 2 and performs heat exchange between a thermal fluid having a temperature higher than the temperature of ammonia inside the fuel tank 14, that is, a thermal fluid having a temperature higher than the atmospheric temperature or ordinary temperature, and the ammonia flowing through the inside of the ammonia feed pipe 27. The thermal fluid used is, for example, a thermal fluid such as shown in FIG. 2(A) to FIG. 2(C).

The expander 111 causes the ammonia, which reached a high temperature by the heat absorbing heat exchanger 110, to expand. The expander 111 used is for example a turbine. In this case, the turbine is made to be driven by the expansion of ammonia at the turbine. Therefore, in the expander 111, power is extracted along with the expansion of ammonia. In the present embodiment, a power generator 113 is coupled to the expander 111, whereby the power generator 113 is driven by the power extracted by the expander 111. That is, in the present embodiment, in the power generator 113, electrical power is produced by the expansion of ammonia in the expander 111.

The heat releasing heat exchanger 112 is used to cool the high temperature ammonia flowing out from the expander 111. Particularly, when injecting liquid ammonia from the ammonia injector 13, it is used to condense and liquefy the ammonia vapor flowing out from the expander 111.

In such a configured internal combustion engine of the present embodiment, the ammonia flowing out from the fuel tank 14 first flows into the heat exchanger 110, is raised in temperature, and is made to vaporize. Then, in the expander 111, a portion of the thermal energy of the ammonia is converted to mechanical energy, and electrical power is produced by the power generator 113 by the expansion of ammonia. That is, power is made to be regenerated from the thermal energy of ammonia. The ammonia flowing out from the expander 111 is made to flow into the heat releasing heat exchanger 112, and the heat of ammonia is released into the atmosphere. Along with this, the ammonia vapor is condensed and liquefied, then the liquid ammonia is fed to the ammonia injector 13. The temperature of ammonia, even when passing through the heat releasing heat exchanger 112, is a temperature higher than the ammonia inside the fuel tank 14, therefore the ammonia injector 13 is fed with ammonia having a temperature higher than the ammonia inside the fuel tank 14.

Further, in the present embodiment, the temperature of ammonia fed to the ammonia injector 13 is regulated by controlling the load of electrical generation of the generator 113. That is, when the load of electrical generation by the generator 113 is low, the degree of expansion of the ammonia at the expander 111 is small, therefore, at the expander 111, only a small amount of conversion from thermal energy to mechanical energy is performed. Therefore, the temperature of the ammonia flowing out from the expander 111 stays high. On the other hand, when the load of electrical generation by the generator 113 is high, the degree of expansion of the ammonia at the expander 111 is large, therefore, at the expander 111, a large amount of heat energy is converted to mechanical energy. Therefore, the temperature of ammonia flowing out from the expander 111 falls.

Therefore, when the temperature of ammonia flowing out from the expander 111 or the heat releasing heat exchanger 112 is high, the load of electrical generation by the generator 113 is raised. On the other hand, when the temperature of ammonia is low, the load of electrical generation by the generator 113 is made to fall. Due to this, the temperature of ammonia flowing out from the heat releasing heat exchanger 112 can be maintained at the target temperature or the vicinity of the target temperature range. Particularly, in the present embodiment, the temperature of ammonia fed to the ammonia injector 13 can be appropriately controlled while recovering power from the heat of ammonia with the generator 113.

Note that, in the fuel feed system shown in FIG. 13(A), there may be provided a bypass pipe bypassing the heat absorbing heat exchanger 110, expander 111, and heat releasing heat exchanger 112 and provided a flow rate control valve controlling the flow rate of ammonia flowing into the ammonia feed pipe 27 as is and the flow rate of ammonia flowing into the bypass pipe. In such a configured fuel feed system, the temperature of ammonia flowing into the ammonia injector 13 can be maintained accurately at the target temperature or vicinity of the target temperature. Note that, when a bypass pipe is provided, the load of electrical generation of the generator 113 may not be controlled and may be left constant.

Further, the heat releasing heat exchanger 112 may be omitted. In this case, the ammonia flowing out from the expander 111 flows directly into the ammonia injector 13, so it is necessary to make the temperature of ammonia at the expander 111 fall to a certain degree.

Further, as shown in FIG. 13(B), there may be provided a return passage 114 making a portion of the ammonia flowing out from the heat releasing heat exchanger 112 flow back into the heat absorbing heat exchanger 110 and provided, at the branching part to the return passage 114, a flow rate control valve 115 for controlling the flow rate of ammonia fed to the ammonia injector 13 and the flow rate of ammonia circulating through the heat absorbing heat exchanger 110, expander 111, and heat releasing heat exchanger 112. By configuring the invention in such a way, the ammonia flowing out from the fuel tank 14 circulates through the heat absorbing heat exchanger 110, expander 111, and heat absorbing heat exchanger 112 and acts as a Rankin cycle. In this case, a portion of the ammonia circulating inside the Rankin cycle is fed to the ammonia injector 13.

While the invention has been described with reference to specific embodiments chosen for purpose of illustration, it should be apparent that numerous modifications could be made thereto by those skilled in the art without departing from the basic concept and scope of the invention.

### REFERENCE SIGNS LIST

- 1: engine body
- 2: combustion chamber
- 8: intake port
- 10: exhaust port
- 13: ammonia injector
- 14: fuel tank
- 21: upstream exhaust gas purification system
- 23: downstream exhaust gas purification system
- 24: ammonia feed pump
- 27: ammonia feed pipe
- 28: heat exchanger
- 29: temperature sensor
- 30: ECU
- 50: cooling system
- 60: vehicular air-conditioning system

## Claims

1. An ammonia burning internal combustion engine using ammonia as fuel, comprising an ammonia feed device feeding ammonia to a combustion chamber and a temperature/pressure raising system raising the temperature or raising the pressure of the ammonia fed to the ammonia feed device,
wherein the temperature/pressure raising system raises the temperature or raises the pressure with energy generated along with operation of the internal combustion engine.

2. An ammonia burning internal combustion engine as set forth in claim 1, further comprising a fuel tank storing ammonia,
wherein the temperature/pressure raising system is provided at a fuel feed passage between the fuel tank and ammonia feed device.

3. An ammonia burning internal combustion engine as set forth in claim 1 or 2, wherein the temperature/pressure raising system is a heat exchanger performing heat exchange between the ammonia fed to the ammonia feed device and a thermal fluid inside the internal combustion engine or a thermal fluid inside a vehicle mounted with the internal combustion engine, becoming higher in temperature than ordinary temperature when the internal combustion engine is operating.

4. An ammonia burning internal combustion engine as set forth in claim 1 or 2, further comprising a generator driven by the ammonia burning internal combustion engine,
wherein the temperature/pressure raising system raises the temperature or raises the pressure of ammonia by a heater or a compressor driven by electric power produced by the generator.

5. An ammonia burning internal combustion engine as set forth in any one of claims 1 - 4, further comprising a temperature detection device detecting a temperature of the ammonia fed to the ammonia feed device,
wherein the temperature/pressure raising system raises the temperature of ammonia by the heat generated along with operation of the internal combustion engine and controls the heat amount added to the ammonia based on the temperature detected by the temperature detection device.

6. An ammonia burning internal combustion engine as set forth in claim 1 or 2, wherein the temperature/pressure raising system is a cooling device cooling the internal combustion engine, the ammonia used as fuel is used as a cooling medium of the cooling device, and the ammonia is raised in temperature along with cooling of the internal combustion engine.

7. An ammonia burning internal combustion engine as set forth in claim 1 or 2, wherein the temperature/pressure raising system is an air-conditioning system cooling a passenger compartment of a vehicle mounted with the internal combustion engine, the ammonia used as fuel is used as a cooling medium of the air-conditioning system, and the ammonia is raised in temperature along with cooling of the passenger compartment of the vehicle.

8. An ammonia burning internal combustion engine as set forth in claim 1 or 2, wherein the temperature/pressure raising system is an air-conditioning system cooling a passenger compartment of a vehicle mounted with the internal combustion engine, the ammonia used as fuel is used as a cooling medium of the air-conditioning system, the air-conditioning system is provided with a compressor pressurizing the cooling medium, and the ammonia is raised in pressure by the compressor.

9. An ammonia burning internal combustion engine as set forth in any one of claims 1 - 8, further comprising a temperature detection device detecting a temperature of the ammonia fed to the ammonia feed device or a temperature of the ammonia flowing out from the temperature/pressure raising system, a bypass passage bypassing the temperature/pressure raising system, and a flow rate control valve able to regulate the flow rate of ammonia flowing into the temperature/pressure raising system and bypass passage, wherein the flow rate of ammonia flowing into the temperature/pressure raising system is controlled based on the temperature detected by the temperature detection device.

10. An ammonia burning internal combustion engine as set forth in any one of claims 1 - 9, further comprising an insulating heat storage container arranged at the temperature/pressure raising system or downstream of the temperature/pressure raising system,
wherein ammonia having a temperature higher than ordinary temperature is stored inside the heat storage container when the internal combustion engine is operating, and the ammonia inside the heat storage container is fed to the ammonia feed device when restarting a stopped internal combustion engine.

11. An ammonia burning internal combustion engine as set forth in claim 2, further comprising a branch passage branched from a fuel feed passage between the temperature/pressure raising system and ammonia feed device and an insulating heat storage container provided at the branch passage,
wherein ammonia having a temperature higher than ordinary temperature is stored inside the heat storage container when the internal combustion engine is operating, and the ammonia inside the heat storage container is fed to the ammonia feed device when restarting a stopped internal combustion engine.

12. An ammonia burning internal combustion engine as set forth in claim 11, further comprising a flow rate ratio control valve controlling the ratio of the flow rate of ammonia fed from the fuel tank through the temperature/pressure raising system to the ammonia feed device and the flow rate of ammonia fed from the heat storage container to the ammonia feed device,
wherein the flow rate ratio control valve is controlled so that the temperature of ammonia fed to the ammonia feed device becomes a target temperature when restarting the internal combustion engine.

13. An ammonia burning internal combustion engine as set forth in claim 1 or 2, wherein the temperature/pressure raising system is further provided with a heat exchanger performing heat exchange between the ammonia fed to the ammonia feed device and a thermal fluid inside the internal combustion engine or a thermal fluid inside a vehicle mounted with the internal combustion engine, becoming higher in temperature than ordinary temperature when the internal combustion engine is operating, and an expander expanding the ammonia heated by the heat exchanger, the ammonia which flows out from the expander is fed to the ammonia feed device, and the temperature of ammonia which flows out from the expander is controlled by adjusting the degree by which the ammonia is expanded by the expander.

14. An ammonia burning internal combustion engine as set forth in claim 13, further comprising a power recovery device driven by the expander.

15. An ammonia burning internal combustion engine as set forth in claim 13 or 14, further comprising a cooling device for cooling the ammonia flowing out from the expander.

16. An ammonia burning internal combustion engine as set forth in any one of claims 13 - 15, further comprising a bypass passage for bypassing the heat exchanger and expander and a flow rate control valve regulating the flow rate of ammonia flowing into the bypass passage.

17. An ammonia burning internal combustion engine as set forth in any one of claims 13 - 16, further comprising a return passage for making a portion of the ammonia flowing out from the expander flow into the heat exchanger once again.
